(19) Europäisches Patentamt
European Patent Office
Office européen des brevets

(11) **EP 4 745 107 A1**

(12) **EUROPEAN PATENT APPLICATION**

(43) Date of publication:
**20.05.2026 Bulletin 2026/21**

(21) Application number: 24213407.0

(22) Date of filing: **15.11.2024**

(51) International Patent Classification (IPC):
**C04B 26/28** (2006.01)    **C04B 28/00** (2006.01)
**C04B 28/26** (2006.01)

(52) Cooperative Patent Classification (CPC):
(C-Sets available)
**C04B 26/285; C04B 28/001; C04B 28/26;**
C04B 2111/00612                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Cormo AG**
**1566 St-Aubin FR (CH)**

(72) Inventors:
• **GRASS, Stefan**
  **1566 ST-AUBIN (CH)**
• **LECHOT, Jonas**
  **1566 ST-AUBIN (CH)**

(74) Representative: **Plasseraud IP**
**104 Rue de Richelieu**
**CS92104**
**75080 Paris Cedex 02 (FR)**

(54) **FIBER-MINERAL PANEL, NOTABLY FOR THE BUILDING INDUSTRY, MADE OF CLAY AND BIOSOURCED FIBERS AND METHOD FOR PRODUCING SAID PANEL**

(57)    The invention aims at providing a fiber-mineral panel, notably for the building industry, made of clay and biosourced fibers, which can constitute a sustainable, ecofriendly & biosourced panel with the suited mechanical properties, thermal and acoustic insulation behavior as well as flame resistance.

This aim is achieved by the invention which concerns a [Claim 1] Fiber-mineral panel notably for the building industry, comprising (A) at least one absorbent swelling mineral material and (B) biosourced fibers, preferably vegetable fibers,
• Which [A] is - in % by dry mass / total mass of the panel and in an increasing order of preference-, such as:

$$5 \leq [A] < 50 \ ; \ 10 \leq [A] < 50 \ ; \ 15 \leq [A] < 50 \ ; \ 20 \leq [A] < 50 \ ;$$

• Which [B] is - in % by dry mass / total mass of the panel and in an increasing order of preference-, such as:

$$50 < [B] \leq 95 \ ; \ 50 < [B] \leq 90 \ ; \ 50 < [B] \leq 85 \ ; \ 50 < [B] \leq 80 \ ;$$

• Which Volumic Mass VMf is - in g/L and in an increasing order of preference-, such as:

$$300 \leq VMf \leq 650 \ ; \ 350 \leq VMf \leq 600 \ ; \ 350 \leq VMf \leq 550.$$

The method for producing said panel is another object of the invention.

**(Cont. next page)**

(52) Cooperative Patent Classification (CPC): (Cont.)

C-Sets
**C04B 26/285, C04B 18/24, C04B 18/241,
C04B 18/248;
C04B 28/001, C04B 24/383, C04B 18/24,
C04B 18/241, C04B 18/248;
C04B 28/26, C04B 24/383, C04B 18/24,
C04B 18/241, C04B 18/248**

## Description

### Technical Field

The invention relates generally to dry walls and particularly to light panels/slabs formed from a mixture of clay and biosourced fibres.

The invention also pertains to a manufacturing method of such panels.

### Background Art

Drywall walls are walls that are constructed using dry construction methods without the use of water-containing building materials such as concrete or plaster.

Dry walls are built from construction elements which can be panels. These latter are intended for different building uses such as exterior/interior finishings of buildings and are either mounted directly on a substructure for cladding walls, ceilings, floors, roof slopes and the like or for building intermediate walls (partitions) on stand structures.

These uses require given mechanical specifications, for instance breaking strength at a certain thickness.

These panels could be also interesting for the contribution they bring to thermal and/or acoustic insulation including summer heat protection.

These panels can be plasterboards, gypsum fiberboards, wood-based panels, etc.

Moreover, WO2013/080025A1 describes a building composite panel, adapted to be supported by a fixed structure and manufactured entirely by a cold operation, comprising an inner core of mineralized (Portland cement) wood fibers, a first coating formed by a first fluid composition comprising a solution of crude clay (60-65%) in water, adapted to impregnate said mineralized wood fibers and naturally dried, and a second outer coating formed by a second thick composition comprising a mixture of binders (13-14 % of potassium or sodium silicate), of clay (25-30%) and of kaolin (25-30%) and again undergoing a natural drying operation.

These expensive known panels are heavy and do not fulfill the mechanical specifications required as building elements.

In addition, they are not eco-friendly due to their compositions. In particular, Portland cement production has a strong negative impact on the environment due to the large quantities of carbon dioxide it generates. In addition, the combustion of fossil fuels required to heat the cement kiln releases carbon dioxide. If we add the additional emissions from grinding, we obtain almost one ton of $CO_2$ per ton of Portland cement. Overall, the cement industry is responsible for around 7-9% of global carbon dioxide emissions. Furthermore, handling Portland cement can lead to health problems (such as allergies), notably due to its high alkalinity (pH above 13) and the presence in its composition of hazardous elements such as hexavalent chromium [Cr (VI)], which can be released during kneading (toxicity through skin contact).

### Objectives of the invention

In this context, the invention aims to satisfy at least one of the following objectives.

An objective of the invention is to provide a new biosourced and eco-friendly fiber-mineral panel notably for the building industry, said panel being an advantageous substitute to plasterboards.

An objective of the invention is to provide a new biosourced and eco-friendly fiber-mineral panel notably for the building industry, which fulfills the mechanical specifications required for the building elements, while remaining light in order to facilitate its handling.

An objective of the invention is to provide a new biosourced and eco-friendly fiber-mineral panel notably for the building industry, which fulfills the mechanical specifications required for the building elements and which is cheap and easy to manufacture.

An objective of the invention is to provide a new biosourced and eco-friendly fiber-mineral panel notably for the building industry, which fulfills the mechanical specifications required for the building elements, which is cheap and easy to manufacture, and which is flame resistant.

An objective of the invention is to provide a new biosourced and eco-friendly fiber-mineral panel notably for the building industry, which fulfills the mechanical specifications required for the building elements, which is cheap and easy to manufacture, which is flame resistant and which has good insulating acoustic and/or thermal properties.

An objective of the invention is to provide an unexpensive, simple and industrial method for manufacturing biosourced and eco-friendly fiber-mineral panels, notably for the building industry, said panels fulfilling the mechanical specifications required for the building elements.

One particular aspects of the invention is the preparation of flame resistant natural panels. Whereas available natural panels can be ignited despite treatment with a flame retardant, the panels presented here are self-extinguishing after removal of the flame source, due to their high content of clay, thereby opening new applications to natural panels, e.g.

in multi-floor buildings.

## Summary of the invention

The inventors have had the merit to invest a lot of time and money in R&D to eventually find out a new fiber-mineral panel notably for the building industry, comprising (A) at least one absorbent swelling mineral material and (B) biosourced fibers, preferably vegetable fibers,

- Which [A] is - in % by dry mass / total mass of the panel and in an increasing order of preference-, such as:

-

$$5 \leq [A] \leq 50 \ ; \ 10 \leq [A] \leq 50 \ ; \ 15 \leq [A] \leq 50 \ ; \ 20 \leq [A] \leq 50 \ ;$$

- Which [B] is - in % by dry mass / total mass of the panel and in an increasing order of preference-, such as:

$$50 \leq [B] \leq 95 \ ; \ 50 \leq [B] \leq 90 \ ; \ 50 \leq [B] \leq 85 \ ; \ 50 \leq [B] \leq 80 \ ;$$

- Which Volumic Mass $VM^f$ (final $VM^f$) is - in g/L and in an increasing order of preference-, such as :

$$300 \leq VM^f \leq 650 \ ; \ 350 \leq VM^f \leq 600 \ ; \ 400 \leq VM^f \leq 550 \ ;$$

The mechanical properties of the panels are achieved basically without addition of a binding agent. Without being bound by the theory, these achievements come at least in part from making use and optimizing the formation of hydrogen bonds, by interaction of hydrogen (H+) and hydroxides (OH-) available from water, the surface of the cellulosic fibers, clay and sodium hydroxide.

These interesting and sustainable substitutes to gypsum boards, comply with the awaited specifications for this kind of panels useable notably in the building field.

Some of these awaited specifications can be the ones according to EN 520 (CEN 2004a) in terms of mechanical properties, thermal insulation properties, fire resistance, acoustic properties (e.g. acoustic absorption), and permeability to both air and water. Concerning both compressive and tensile properties of the board itself, it can be in line with EN 789 (CEN 2004b), which rules the assessment of mechanical properties of wood-based panels.

The excellent compromise between mechanical properties and lightness, offers a comfort of handling which is welcome by the operators and the craftpersons.

The fiber-mineral panel according to the invention is also characterized by at least one of the following features:

   i. Breaking strength BS12 at a thickness of 12 mm is - in kN and in an increasing order of preference-, such as: $0.02 \leq BS12 \leq 2$ ; $0.03 \leq BS12 \leq 1.5$ ; $0.04 \leq BS12 \leq 1.2$ ; $0.05 \leq BS12 \leq 1.0$ ;

   ii. Breaking strength BS16 at a thickness of 16 mm is - in kN and in an increasing order of preference-, such as: $0.05 \leq BS16 \leq 3$ ; $0.08 \leq BS16 \leq 2.5$ ; $0.1 \leq BS16 \leq 2.0$; $0.15 \leq BS16 \leq 1.5$;

   iii. Fire retardant material according to the B1 classification (German standard);

   iv. Acoustic absorbent material according to the A, B or C classification EN ISO 11654.

The breaking strength BS12 or BS16 measurement method is in accordance with the method as defined in the examples hereinafter.

The B1 classification corresponds to the DIN4102 Reaction to Fire standard used in Germany. It was made by the Deutsches Institut für Normung (German Standards Institute).

The fibre-mineral panels according to the invention can have also a Noise Reduction Coefficient or NRC according to ASTM standard C 423- in % noise reduction and in an increasing order of preference-, such as:

$$50 \leq NRC; \ 60 \leq NRC \leq 300 \ ; \ 70 \leq NRC \leq 300 \ ; \ 80 \leq NRC \leq 300.$$

The fibre-mineral panels according to the invention can have also a Sound Transmission Class or STC according to ASTM standard C 423- integer in an increasing order of preference-, such as:

$$50 \leq STC; \ 60 \leq STC \leq 500 \ ; \ 70 \leq STC \leq 500 \ ; \ 80 \leq STC \leq 500.$$

Among other advantages of the fiber-mineral panel according to the invention, one can mention its cheap, easy and industrial manufacturing.

Preferably, the absorbent swelling mineral material (A) of the composite panel according to the invention is chosen:

* among mineral materials having a Water Absorption Capacity WAC is- in % of water / kg of dry mineral material and in an increasing order of preference-, such as:

$$WAC \geq 100\%; \ WAC \geq 200\%; \ WAC \geq 300\%$$

* preferably among clays with a grain size $\leq 150\mu m$, preferably $\leq 125\mu m$;

* more preferably among bentonites with a content of montmorillonite $\geq 80\%$ by mass, preferably $\geq 70\%$ by mass.

Moreover, biosourced fibers (B) of the sustainable fiber-mineral panel according to the invention, preferably come:

* from fibers sources comprising more than 40 %, preferably more than 50% by dry mass of cellulose and possibly also hemi-cellulose;

* preferably from fibers sources chosen among wood, crop residue, wastepaper, sugar cane bagasse, hemp and mixtures thereof.

Advantageously, biosourced fibers (B) have an average length $AL^B$ which is - in mm and in an increasing order of preference-, such as:

$$0.1 \leq AL^B \leq 4 \ ; \ 0.3 \leq AL^B \leq 3 \ ; \ 0.5 \leq AL^B \leq 3 \ ; \ 1 \leq AL^B \leq 2 \ .$$

According to a remarkable embodiment of the invention, the biosourced fibers (B) have a dry matter DM - in % and in an increasing order of preference-, such as:

$$15 \leq DM \leq 95 \ ; \ 20 \leq DM \leq 90 \ ; \ 30 \leq DM \leq 85 \ ; \ 40 \leq DM \leq 80.$$

In a suitable embodiment, the fiber-mineral panel according to the invention has a thickness $T^h$ is - in mm and in an increasing order of preference-, such as:

$$2 \leq T^h \leq 50 \ ; \ 4 \leq T^h \leq 40 \ ; \ 5 \leq T^h \leq 35; \ 8 \leq T^h \leq 30.$$

A noteworthy feature of the invention is that the fiber-mineral panel can comprise additional components C selected in the group comprising -advantageously composed of -:

C.1. organic and/or inorganic binders;

* organic binders being chosen in the group comprising -advantageously composed of - (hemi)celluloses and their derivates including modified celluloses, particularly alkyl-celluloses, especially methyl-celluloses, starches and their derivates including modified starches, lignin, latex, and mixtures thereof;

* inorganic binders being chosen in the group of silicates, in particular sodium silicate or potassium silicate and mixtures thereof;

C.2. and mixtures thereof.

According to an advantageous embodiment of the invention, the fiber-mineral panel comprises additional components C in a concentration [C] as such -in % by dry mass / total mass of the panel and in an increasing order of preference:

$$0 \leq [C] \leq 10 \; ; \; 0 \leq [C] \leq 5 \; ; \; 0 \leq [C] \leq 1 \; ; \; 0 \leq [C] \leq 0.5.$$

In another of its aspects, the present invention concerns a method for manufacturing a fiber-mineral panel, in particular according to the invention, said panel comprising (A) at least one absorbent swelling mineral material and (B) biosourced fibers, preferably vegetable fibers,
wherein at least some of the following steps are implemented, in this order or in a different order:

**S.1.**
Implementing at least one absorbent swelling mineral material A in a concentration [A] which is - in % by dry mass / total mass of the fibre-mineral panel and in an increasing order of preference-, such as:

$$5 \leq [A] \leq 50 \; ; \; 10 \leq [A] \leq 50 \; ; \; 15 \leq [A] \leq 50 \; ; \; 20 \leq [A] \leq 50 \; ;$$

**S.2.**
Mixing A, preferably under the form of powder, with water at a mass ratio W/A-in kg and in an increasing order of preference-, such as:

$$2 \leq W/A \leq 1; \; 3 \leq W/A \leq 1; \; 3.5 \leq W/A \leq 1;$$

using a standard high shear mixer, so as to produce a gel-like substance;
**S.3.**
Implementing biosourced fibers B in a concentration [B] is - in % by dry mass / total dry mass of the of the fibre-mineral panel and in an increasing order of preference-, such as:

$$50 \leq [B] \leq 95 \; ; \; 50 \leq [B] \leq 90 \; ; \; 50 \leq [B] \leq 85 \; ; \; 50 \leq [B] \leq 80 \; ;$$

**S.4.**
Mixing B with the gel-like substance from S2 ($G^{S2}$), with B at a mass ratio $G^{S2}$:B

- in an increasing order of preference-, such as:

$$1 \leq G^{S2}{:}B \leq 6; \; 1 \leq G^{S2}{:}B \leq 5; \; 1 \leq G^{S2}{:}B \leq 4;$$

so as to produce a homogenous wet mass WM with a water content $WC^{SA}$ of
- in % by mass of water / total wet mass in an increasing order of preference-, such as:

$$45 \leq WC^{SA} \leq 85 \; ; \; 50 \leq WC^{SA} \leq 80 \; ; \; 55 \leq WC^{SA} \leq 75 \; ; \; 50 \leq WC^{SA} \leq 75 \; ;$$

**S.5.**
Making at least one layer of WM from S4 which thickness $t^{SA}$ is - in mm and in an increasing order of preference-, such as:

$$10 \leq t^{SA} \leq 150 \; ; \; 20 \leq t^{SA} \leq 120 \; ; \; 30 \leq t^{SA} \leq 110 \; ; \; 40 \leq t^{SA} \leq 100 \; ;$$

**S.6.**
De-aerating and compressing the SA layer from S5 to a Volumic Mass VM' (intermediary VM') is - in g/L and in an increasing order of preference-, such as:

$$800 \leq VM^{i} \leq 5000 \; ; \; 900 \leq VM^{i} \leq 4000 \; ; \; 1000 \leq VM^{i} \leq 3000,$$

so as to produce a panel;

**S.7.** Drying the panel from S6;

**S.8.** possible surface treatment of at least one face of the panel from S7;

**S.9.** possible coating of at least one face of the panel;

**S.10.** possible cutting of the panel from S7, S8 or S9;

**S.11.** possible conditioning of the panel(s).

This efficient, industrial, and reliable method leads notably to the advantageous fiber-mineral panel according to the invention.

The method according to the invention, which is simple, industrial and economical, leads to an eco-friendly and partially crop-sourced fiber-mineral panel which is light, thermally and/or acoustically insulating, fire resistant, and with suitable mechanical properties.

A gel like material ($G^{S2}$) is, for instance, a thick liquid substance.

The wet mass (WM) from S4 consists, for instance, of small agglomerates which disintegrate with pressure applied in S6 to form a homogenous panel.

According to a variant, this method comprises a step $S2^1$ wherein at one additional component C is implemented, preferably an additional component C1, in a concentration [C1] which is - in % by dry mass / total mass of the dried fibre-mineral panel and in an increasing order of preference-, such as:

$$0.5 \leq [C1] \leq 10 \; ; \; 1 \leq [C1] \leq 8 \; ; \; 1.5 \leq [C1] \leq 6 \; ; \; 2 \leq [C1] \leq 5 \; ;$$

such C1 addition being preferably done by mixing C1, preferably under the form of powder, with water at a mass ratio W/C1-in kg and in an increasing order of preference-, such as:

$$5 \leq W/C1 \leq 80; \; 10 \leq W/C1 \leq 70; \; 15 \leq W/C1 \leq 60; \; 20 \leq W/C1 \leq 50 \; ;$$

so as to produce a sticky material ($PS2^1$).

According to another variant of this method, cellulose fibers are activated by a pretreatment for better bonding, S3 is preceded by a step S3° wherein biosourced fibers B are submitted to a pretreatment with a caustic liquid containing at least one base, preferably selected in the group comprising -advantageously composed of - NaOH, KOH or mixtures thereof; wherein the base concentration $[BC^i]$ of the impregnation basic liquid is - in % by mass / total mass of the impregnation basic liquid and in an increasing order of preference-, such as:

$$0.5 \leq [BC^i] \leq 10 \; ; \; 1 \leq [BC^i] \leq 10 \; ; \; 2 \leq [BC^i] \leq 8 \; ; \; 3 \leq [BC^i] \leq 7 \; ;$$

in order to arrive at a pH-value of WM $\geq$ 10, preferably around 11.

The elevated pH-value of the pretreated fibers further results in results in a resistance of the finished panels against microbial development, which is important in applications with varying moisture and/or temperature changes, e.g. bathrooms, kitchen, and cellars.

According to a variant of this method, a coating S9 of at least one face of the panel, is made with at least one layer preferably selected in the group comprising - advantageously composed of - .

- cardboard sheet,

- glass fiber tissue,

- hydrophobic coating,

- building primer,

- construction render,

- And combinations thereof.

The method according to the invention can also be characterized also by at least one of the following features:

f.1.: S2 consists essentially in using a standard kitchen mixer and preferably using water at a temperature $T^{w1}$ of - in °C and in an increasing order of preference-, such as:

$$5 \leq T^{w1} \leq 80 \; ; \; 10 \leq T^{w1} \leq 70 \; ; 15 \leq T^{w1} < 50 \; ; 20 \leq T^{w1} \leq 40;$$

so as to produce a gel like material (GS2), which is a thick liquid substance;

f.2. : S2' consists essentially in using a standard kitchen mixer, and preferably using water at a temperature $T^{w2}$ of - in °C and in an increasing order of preference-, such as:

$$5 \leq T^{w2} \leq 80 \; ; \; 10 \leq T^{w2} \leq 70 \; ; 15 \leq T^{w2} < 50 \; ; 20 \leq T^{w2} \leq 40;$$

so as to produce paste like material (PS2[1]);

f.3.: S4 consists essentially in using a mixer and preferably using water at a temperature $T^{w3}$ of - in °C and in an increasing order of preference-, such as:

$$5 \leq T^{w3} \leq 80 \; ; \; 10 \leq T^{w3} \leq 70 \; ; 15 \leq T^{w3} \leq 50 \; ; 20 \leq T^{w3} \leq 40;$$

so as to produce sticky agglomerate (SA);

f.4.The mixing according to S4 is done by means of a high shear mixer, a biomass shredder or a soil mulcher consisting of a rotating shaft and attached treatment devices;

f.5. S5 consists essentially in pouring SA in a mold corresponding to the form of the panel to be manufactured;

f.6. S6 consists essentially in implementing a double plate press;

f.7.S7 consists essentially in implementing air or vacuum drying of the panel(s) at a temperature a temperature T1 which is - in °C and in an increasing order of preference-, such as:

$$20 \leq T1 \leq 250; \; 40 \leq T1 \leq 200; 50 \leq T1 \leq 180; 60 \leq T1 \leq 160;$$

during a time td - in hours, depending partly on the thickness of the panels, and in an increasing order of preference-, such as:

$$1 \leq td \leq 48; \; 2 \leq td \leq 10; 3 \leq td \leq 8; 4 \leq td \leq 6$$

The simple, industrial and economical method according to the invention leads to an eco-friendly, crop-sourced and economically viable panel which is a noteworthy substitute to plasterboard.

**Definitions**

According to the terminology of this text, the following non limitative definitions have to be taken into consideration:

any singular is equivalent to a plural.

"Fibre-mineral Panel" in this specification includes a composite panel which can be structural and non structural wall, internal or exterior wall, or piece of wall, sheets, tile, pad, slab, board and similar forms for the panel of the invention.

"absorbent swelling mineral material" means that the material can take up at least 2 times of its own weight of water and increases in weight accordingly.

**Detailed description**

*Fiber-mineral panel notably for the building industry*

Absorbent swelling mineral material (A)

A is chosen among mineral materials having a Water Absorption Capacity WAC of i.e 2-6 kg of water / kg of dry mineral material.

"Dry" with reference to the mineral material A means that the material has a residual moisture content equal to or lower than 15%, preferably equal to or lower than 10%.

Clays or mixtures of clays under the form of a powder of fine particles, typically equal to or lower than 200 microns are suitable mineral materials A. Clays can be principally montmorillonite (commonly known as bentonite), beidellite, nontronite, hectorite, saporite, attapulgite, sepiolite, vermiculite, hallyosite, kaolinite, illite, and chlorite. Montmorillonite is a naturally-occurring clay whose properties of low hydraulic conductivity, high cation exchange capacity and adsorption properties renders it particularly useful in the present invention. Sodium bentonite is preferred to calcium bentonite.

The grain size of A is advantageously as such:

70% $\leq$ 63$\mu$m, preferably 80% $\leq$ 63$\mu$m and 90% $\leq$ 125$\mu$m, preferably 98% $\leq$ 125$\mu$m. <u>Biosourced fibers (B)</u>

Cellulosic (and possibly hemi-cellulosic) fibers sources can be wood, crop residue, wastepaper, sugar cane bagasse, hemp and mixtures thereof.

<u>Additional components C</u>

For instance organic binders C1 can be : Cellulose and its derivatives, starch and its derivatives, proteins and its derivatives, lignin and its derivatives, latex and others.

For instance inorganic binders C1 can be : Silicates, e.g. sodium silicate and/or potassium silicate.

<u>Volumic Mass VM</u>

The VM measuring method is described hereinafter: At first, the dimension of the sample is measured using a meter and the volume is calculated from these figures. Secondly, the mass of the sample is measured using a weigh. The VM is the mass divided through its volume.

<u>*Method for manufacturing a fiber-mineral panel notably for the building industry*</u>

<u>Main mode of implementation : Steps S1 to S11</u>

<u>Step S1:</u>

The implemented absorbent swelling mineral material A is as described herein.

<u>Step S2:</u>

The gel like material (GS2) is produced by mixing a dry powder in a quantity corresponding to a concentration [A] of 5-50 % by dry mass / total dry mass of the fibre-mineral panel with water, at a mass ratio W/A of 2:1 to 6:1, using a mixer, for instance a kitchen mixer

<u>Optional Step S2[1]:</u>

The paste like material (PS2') is produced by mixing a dry C1 powder in a quantity corresponding to a concentration [C1] of 0.5-10 % by dry mass / total dry mass of the fibre-mineral panel with water, at a mass ratio W/C1 of 5-80, using mixer, for instance a kitchen mixer

<u>Step S3:</u>

The implemented biosourced fibers B are as described herein.

<u>Step S4:</u>

The sticky agglomerate (SA) is produced by mixing dry B in a quantity corresponding to a concentration [B] of 50-95 % by dry mass / total dry mass of the fibre-mineral panel with GS2 (possibly plus C1) using mixer, for instance a kitchen mixer (high shear mixer).

<u>Step S5:</u>

A layer corresponding to the form and the size of the fiber-mineral panel to be manufactured, is molded in an appropriate mold.

Step S6:

The layer from S5 is de-aerated and compressed using a frame, to form a panel of thickness $2\,mm \leq T^h \leq 50\,mm$. The pressure applied is between 1-100 t/m2, preferably between 2-20 t/m2, and more preferably between 3-20 t/m2.

Step S7:

The pressed layer from S6 is dried, preferably air dried at around 50-200, e.g. 120°C, during 1-15hours , e.g 4-5 hours.

Optional Step S8:

The surface treatment consists essentially in abrading, for instance by sanding.

Optional Step S9:

The coating S9 is applied on at least one face of the panel as described hereinafter: If a plaster or a clay liner is applied to the panels, it is done according to the recommendations of the respective supplier.

Optional Step S10:

The panel thus formed can be cut by sawing to the desired size and shape, depending on the intended application. For example, it can be made square, rectangular, triangular, hexagonal, etc.

Optional Step S11:

The conditioning can consist in stacking panels in pile and possibly binding them and/or wrapping.

**Examples**

**Example 1:**

Steps 1&2: 55g of dry sodium-bentonite powder (A) with a grain size of 80%<63$\mu$m and 98%<125$\mu$m are mixed with 220 g of warm water $T^{w1°}$ at 40°C, using a Braun Multimix 5 kitchen mixer at maximum rpm for around 1 minute, thereby creating a gel-like mass with a thick liquid consistency.

[A] is 28.6 % by dry mass / total mass of the panel.

Steps 3&4: 220 g of mechanically refined fibers extracted from corn stems with an average fibre length $AL^B$ of 1-3mm and a dry matter content DM of 71% in mass, were mixed with the gel-like substance (GS2) derived from steps S1 S2 & S2$^1$ thereby impregnating the fibers with GS2, to produce wet mass WM with a water content $WC^{SA}$ of 65%.
Step 5: The impregnated fibers are poured into a frame of 18 x 18 cm and distributed at homogenous thickness, thereby creating manually a fiber layer which thickness $t^{SA}$ is 7.5cm of homogenous Volumic Mass VM' (intermediary VM') of 298 g/L.
Step 6: The homogenous fiber mass is compressed manually and its surface is levelled and smoothened using a simple metal sheet, to form a panel of around 15mm thickness $t^{SA}$ and of homogenous Volumic Mass VM' (intermediary VM$^i$) of 1492 g/L.
Step 7: The panel is taken out of the frame.
Step 8: The panel is air dried at around 120°C during around 5 hours.
Step 9: The panel is sanded how using a grinding machine to give it a smooth, homogenous surface.
The panel analysis gives the following results:

Dimensions: 18 x 18 x 1.5 cm (no shrinking).

Volume: 0.486 L .

Mass: 221 g

Volumic mass: 455 g/L.

Flame resistance (DIN4102 Reaction to Fire standard used in Germany): A sample with the dimensions 5x5cm was cut out of the panel and its corner edge was subjected to the tip of the blue flame generated by a bunsen burner, for a period of 60 seconds. During this time, the product sample turned black where it was directly contacted by the flame. After removal of the flame source, the flame development on the sample extinguished immediately, with no generation of combustable droplets and no subsequnt glimmering. This panel complies with the classification B1 DIN4102 Reaction to Fire standard used in Germany.

Furthermore, knocking on the panel of example 1 makes it possible to observe an absorption of the sound.

## Examples 2-3

The examples 2 & 3 specified in table 1 exemplify other possible recipes and operating conditions. However, the scope of the invention is not limited to these examples and extends to the ranges of parameter and process options as stated before.

Table 1

|  | Example 2 | Example 3 |
|---|---|---|
| Absorbent swelling mineral matrial (A) |  |  |
| Sodium bentonite powder (g) | 100 | 2244 |
| [A] % by dry mass / total mass of the panel | 40 | 38 |
| Water of S2 | 450 | 8222 |
|  |  |  |
| Biosourced fibers (B) |  |  |
| Derived from maize stems, mechanically refined |  |  |
| Wet mass of B (g) | 197 | 4500 |
| Dry Matter of B % | 76 | 68 |
| Dry mass of B (g) | 150 | 3060 |
| Water content of B | 47 | 1440 |
|  |  |  |
| Caustic treatment of the fibers (B1) |  |  |
| 100% sodium hydroxide NaOH (g) | 0 | 80 |
| Water of S2[1] (g) | 0 | 1540 |
|  |  |  |
| Total water (g) | 497 | 10324 |
|  | Example 2 | Example 3 |
|  |  |  |
| Total dry matter (g) | 250 | 4976 |
| Total mass (g) | 747 | 15300 |
| S6 compression | manual | manual + 20 t/m² |
| S7 drying |  |  |
| T1 (°C) | 125 | 150 |
| Final mass (g) | 261 | 5081 |
| Dimensions (cm) | 17.2x17.2x1.8 | 98.2x58.9x1.6 |
| Volume (L) | 0,532 | 9.254 |
| Volumic Mass (g/L) | 490 | 549 |

(continued)

|  | Example 2 | Example 3 |
|---|---|---|
| Shrinking during drying | yes | yes |
| Sample quality | Very hard, no cracks | Very hard, no cracks |

Knocking on the panel of example 2 & 3 makes it possible to observe a bit dumb sound hard and dry.

Panels according to example 3 were used for implementation of a clay-based liner on one product side, at a thickness of 1-3mm. It was found that the liner bonds strongly to the panel, levels out an eventually uneven surface of the panel and allows screwing of the panel onto a support structure, as well as mounting a narrow net to bridge the small gaps between panels on the wall. These features allow prefabrication of the ground liner on the panel production site and mounting and finishing a wall construction in one go and the building/construction site.

Panels according to example 3 were also used for determination of the panel breaking strength BS. The panels were cut (S10) into pieces of 5x25cm, at 12 and 16mm thickness. The panels were placed on supports at a distance of 20 cm, a pressing load was exerted in the middle between the supports and the parameters press load vs bending were monitored and processed by the equipment INSTRON. The 16mm panel showed a breaking strength of 0.08N, which was equivalent to the respective value of a 12.7 mm Knauf gypsum panel with cardboard liner and glass fiber reinforcement (GYPSUM BOARD_Knauf PRO HD https://s7g10.scene7.com/is/content/knauf/2024-KNAUF-PRO-HD-Gypsum-Board-Datasheetpdf).

Panels according to example 3 were also used for determination of the heat conductivity λ, according to the norm NF EN 12667, using Labcomp - FOX 14 for analysis. The resulting value is 0.106 W/m.K. With this value, the claimed panels take an intermediate position between dedicated insulation panels and structural panels such as gypsum panels.

## Claims

1. Fiber-mineral panel notably for the building industry, comprising (A) at least one absorbent swelling mineral material and (B) biosourced fibers, preferably vegetable fibers,

   • Which [A] is - in % by dry mass / total mass of the panel and in an increasing order of preference-, such as:

   $$5 \leq [A] \leq 50 \; ; \; 10 \leq [A] \leq 50 \; ; \; 15 \leq [A] \leq 50 \; ; \; 20 \leq [A] \leq 50 \; ;$$

   • Which [B] is - in % by dry mass / total mass of the panel and in an increasing order of preference-, such as:

   $$50 \leq [B] \leq 95 \; ; \; 50 \leq [B] \leq 90 \; ; \; 50 \leq [B] \leq 85 \; ; \; 50 \leq [B] \leq 80 \; ;$$

   • Which Volumic Mass $VM^f$ is - in g/L and in an increasing order of preference-, such as:

   $$300 \leq VM^f \leq 650 \; ; \; 350 \leq VM^f \leq 600 \; ; \; 350 \leq VM^f \leq 550 \; .$$

2. Fiber-mineral panel according to claim 1 wherein absorbent swelling mineral material (A) is chosen:

   *among mineral materials having a Water Absorption Capacity WAC is- in % of the dry mineral material and in an increasing order of preference-, such as:

   $$WAC \geq 100\%; WAC \geq 200\%; WAC \geq 300\%;$$

   * preferably among clays with a grain size $\leq 150\mu m$, preferably $\leq 125\mu m$;
   *more preferably among bentonites with a content of montmorillonite $\geq 80\%$ by mass, preferably $>\_ 70\%$ by mass.

3. Fiber-mineral panel according to claim 1 or 2 wherein biosourced fibers (B) come from:

   *fibers sources comprising more than 40 %, preferably more than 50% by dry mass of cellulose and possibly also hemi-cellulose;

\* preferably fibers sources chosen among wood, crop residue, wastepaper, sugar cane bagasse, hemp and mixtures thereof.

4. Fiber-mineral panel according to claim 3 wherein biosourced fibers (B) have an average length $AL^B$ is - in mm and in an increasing order of preference-, such as:

$$0.1 \leq AL^B \leq 4 \; ; \; 0.3 \leq AL^B \leq 3 \; ; 0.5 \leq AL^B \leq 3 \; ; 1 \leq AL^B \leq 2 \; .$$

5. Fiber-mineral panel according to claim 3 or 4 wherein biosourced fibers (B) have a dry matter DM - in % and in an increasing order of preference-, such as:

$$15 \leq DM \leq 95 \; ; \; 20 \leq DM \leq 90 \; ; 30 \leq DM \leq 85 \; ; 40 \leq DM \leq 80 \; .$$

6. Fiber-mineral panel according to at least any of claims 1 to 4 comprise additional components C selected in the group comprising -advantageously composed of -:

C.1. organic and/or inorganic binders;

\* organic binders being chosen in the group comprising -advantageously composed of - (hemi)celluloses and their derivates including modified celluloses, particularly alkyl-celluloses, especially methyl-celluloses, starches and their derivates including modified starches, lignine, latex and mixtures thereof;
\* inorganic binders being chosen in the group comprising silicates, particularly sodium or potassium silicate and mixtures thereof;

C.2. and mixtures thereof.

7. Fiber-mineral panel according to at least any of claims 1 to 6, which thickness $T^h$ is - in mm and in an increasing order of preference-, such as:

$$2 \leq T^h \leq 50 \; ; \; 4 \leq T^h \leq 40 \; ; 5 \leq T^h \leq 35; 8 \leq T^h \leq 30.$$

8. A method for manufacturing a fiber-mineral panel, in particular according to at least any of claims 1 to 7, said panel comprising (A) at least one absorbent swelling mineral material and (B) biosourced fibers, preferably vegetable fibers, wherein at least some of the following steps are implemented, in this order or in a different order:

S.1.
Implementing at least one absorbent swelling mineral material A in a concentration [A] which is - in % by dry mass / total mass of the fibre-mineral panel and in an increasing order of preference-, such as:

$$5 \leq [A] \leq 50 \; ; \; 10 \leq [A] \leq 50 \; ; 15 \leq [A] \leq 50 \; ; 20 \leq [A] \leq 50 \; ;$$

S.2.
Mixing A, preferably under the form of powder, with water at a mass ratio W/A-in kg and in an increasing order of preference-, such as:

$$2 \leq W/A \leq 1; 3 \leq W/A \leq 1; 3.5 \leq W/A \leq 1;$$

using a high shear mixer, so as to produce a gel-like substance
S.3.
Implementing biosourced fibers B in a concentration [B] is - in % by dry mass / total dry mass of the of the fibre-mineral panel and in an increasing order of preference-, such as:

$$50 \leq [B] \leq 95 \; ; \; 50 \leq [B] \leq 90 \; ; 50 \leq [B] \leq 85 \; ; 50 \leq [B] \leq 80 \; ;$$

S.4.

Mixing B with the gel-like substance from S2 (GS2), with B at a mass ratio GS2:B - in an increasing order of preference-, such as:

$$1:1 \ \leq \ GS2:B \ \leq \ 6:1; \ 1:1 \leq \ GS2:B \ \leq \ 5; \ 1:1 \ \leq \ GS2:B \ \leq \ 4:1;$$

so as to produce a homogenous wet mass WM with a water content $WC^{SA}$ of - in % by mass of water / total wet mass in an increasing order of preference-, such as:
$45 \leq WC^{SA} \leq 85$ ; $50 \leq WC^{SA} \leq 80$ ; $55 \leq WC^{SA} \leq 75$ ; $50 \leq WC^{SA} \leq 70$ ;
S.5.
Making at least one layer of WM from S4 which thickness $t^{SA}$ is - in mm and in an increasing order of preference-, such as:

$$10 \ \leq \ t^{SA} \leq \ 150 \ ; \ 20 \ \leq \ t^{SA} \ \leq \ 120 \ ; 30 \ \leq \ t^{SA} \ \leq \ 110 \ ; 40 \ \leq \ t^{SA} \ \leq \ 100 \ ;$$

S.6.
De-aerating and compressing the SA layer from S5 to a a Volumic Mass VM' (intermediary VM') is - in g/L and in an increasing order of preference-, such as:

$$800 \ \leq \ VM^i \ \leq \ 5000 \ ; 900 \ \leq \ VM^i \ \leq \ 4000 \ ; 1000 \ \leq \ VM^i \ \leq \ 3000,$$

so as to produce a panel;
S.7. Drying the panel from S6;
S.8. possible surface treatment of at least one face of the panel from S7;
S.9. possible coating of at least one face of the panel;
S.10. possible cutting of the panel from S7, S8 or S9;
S.11. possible conditioning of the panel(s).

9. A method according to claim 8, comprising a step $S2^1$ wherein at one additional component C is implemented, preferably an additional component C1, in a concentration [C1] which is - in % by dry mass / total mass of the fibre-mineral panel and in an increasing order of preference-, such as:

$$0.5 \ \leq \ [C1] \leq \ 10 \ ; \ 1 \ \leq \ [C1] \ \leq \ 8 \ ; 1.5 \ \leq \ [C1] \ \leq \ 6 \ ; 2 \ \leq \ [C1] \leq \ 5 \ ;$$

such C1 addition being preferably done by mixing C1, preferably under the form of powder, with water at a mass ratio W/C1-in kg and in an increasing order of preference-, such as:

$$5 \ \leq \ W/C1 \ \leq \ 80; \ 10 \leq \ W/C1 \ \leq \ 70; 15 \ \leq \ W/C1 \ \leq \ 60; 20 \leq \ W/C1 \ \leq \ 50;$$

so as to produce a paste like material ($PS2^1$).

10. A method according to claim 8 or 9, wherein S3 is preceded by a step S3° wherein biosourced fibers B are submitted to a caustic treatment consisting in impregnating biosourced fibers B with a caustic liquid containing at least one base, preferably selected in the group comprising -advantageously composed of -NaOH, KOH and mixtures thereof; wherein the base concentration $[BC^i]$ of the impregnation basic liquid is - in % by mass / total mass of the impregnation basic liquid and in an increasing order of preference-, such as:

$$0.5 \ \leq \ [BC^i] \ \leq \ 10 \ ; \ 1 \ \leq \ [BC^i] \ \leq \ 10 \ ; 2 \ \leq \ [BC^i] \ \leq \ 8 \ ; 3 \ \leq \ [BC^i] \ \leq \ 7 \ ;$$

in order to arrive at a pH-value of WM >10, preferably around 11.

11. A method according to at least any of claims 8 to 10, wherein a coating S9 of at least one face of the panel, is made with at least one layer preferably selected in the group comprising -advantageously composed of - .

- cardboard sheet,
- glass fiber tissue,

- hydrophobic coating,
- building primer, preferably a base clay plaster
- construction render,
- And combinations thereof.

Europäisches
Patentamt
European
Patent Office
Office européen
des brevets

# EUROPEAN SEARCH REPORT

**Application Number**

EP 24 21 3407

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AU 774 061 B2 (HARSUDI SOEPANDI) 17 June 2004 (2004-06-17) * the whole document * | 1-11 | INV. C04B26/28 C04B28/00 C04B28/26 |
| A | AINA K.S. ET AL: "Comparative Analysis of Properties of Particleboards Made from Corn Cobs at Varying Proportions of Clay Soil", NIGERIAN JOURNAL OF TECHNOLOGICAL DEVELOPMENT, vol. 17, no. 2, 22 July 2020 (2020-07-22), pages 127-133, XP093280260, ISSN: 0189-9546, DOI: 10.4314/njtd.v17i2.8 Retrieved from the Internet: URL:https://www.ajol.info/index.php/njtd/article/download/197844/186590> [retrieved on 2025-05-23] * the whole document * | 1-11 | |
| A | CN 102 417 331 A (XINYANG KEMEI NEW MATERIALS CO LTD) 18 April 2012 (2012-04-18) * the whole document * | 1-11 | |
| A | HERLINA SARI NASMI ET AL: "The Effect of Sodium Hydroxide on Chemical and Mechanical Properties of Corn Husk Fiber", ORIENTAL JOURNAL OF CHEMISTRY, vol. 33, no. 6, 25 December 2017 (2017-12-25), pages 3037-3042, XP093280447, IN ISSN: 0970-020X, DOI: 10.13005/ojc/330642 * the whole document * | 1-11 | |

**TECHNICAL FIELDS SEARCHED (IPC)**

C04B

The present search report has been drawn up for all claims

| Place of search | Date of completion of the search | Examiner |
|---|---|---|
| Munich | 23 May 2025 | Roesky, Rainer |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 3407

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2025

| Patent document cited in search report | | Publication date | Patent family member(s) | Publication date |
|---|---|---|---|---|
| AU 774061 | B2 | 17-06-2004 | NONE | |
| CN 102417331 | A | 18-04-2012 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013080025 A1